# EUROPEAN PATENT APPLICATION

(11) **EP 4 382 007 A1**
(43) Date of publication of application: **12.06.2024**
(21) Application number: 22946483.9
(22) Date of filing: 09.09.2022
(51) Int. Cl.: A47J 31/40, A47J 31/44

(54) **NOVEL CARBONATED WATER MAKER**

(30) Priority: 17.06.2022 CN 202210692748
(71) Applicant: JIANGMEN YIKEMAITE ELECTRONIC TECHNOLOGY CO., LTD, Kaiping, Jiangmen, Guangdong 529300 (CN)
(72) Inventor: SONG, Tony, Jiangmen, Guangdong 529300 (CN)
(74) Representative: Longoni, Alessandra
(86) International application number: PCT/CN2022/118177
(87) International publication number: WO 2023/240810

(57) **Abstract**

Disclosed in the present invention is a new soda machine, comprising a body, a gas path body, a gas inlet body, a gas inlet pressure rod, a driving rod, and a pressing surface cover. A mounting cavity, a soda cavity, and a gas cylinder cavity are provided on the body; an opening/closing door is provided on the soda cavity; a body mounting support is provided in the mounting cavity; the gas path body and the gas inlet body are pivoted on the body mounting support; a water bottle joint is provided on the bottom of the gas path body; and a gas cylinder interface is provided on the bottom of the gas inlet body. Compared with the prior art, a carbon dioxide gas cylinder and the soda bottle can be obliquely mounted on the gas cylinder interface and the water bottle joint, the space for a gripper is larger, the mounting is more convenient, and the soda cavity is protected by the opening/closing door, such that people can be prevented from being hurt when the soda bottle explodes.

## Description

### Technical Field

The invention relates to the field of soda, and in particular to a new soda machine.

### Background Art

A soda machine is a device for preparing soda. The present soda machine has a single function, and a soda bottle and a carbon dioxide gas cylinder need to be mounted on the soda machine from the bottom of a connection port at a specified angle, resulting in a small space for a gripper and mounting inconvenience. At the same time, when being mounted to the soda machine, the soda bottle is completely in communication with the external environment, which leads to a certain risk. That is, if the gas pressure in the soda bottle is too high, the bottle body may easily collapse or explode, or the carbon dioxide gas may be directly sprayed to human body and accordingly harm a user, so the safety factor is low; moreover, two independent buttons are required to control gas inletting and gas venting, which leads to a complicated structure.

### Summary of the Invention

In order to solve the above-mentioned problems, the present invention aims to provide a soda machine that is conveniently mounted with a carbon dioxide gas cylinder and a soda bottle, is safer and can control gas inlet and gas vent at the same time by a pressing surface cover.

The technical solution adopted by the present invention to solve the problems is a new soda machine, comprising:
a body, the front end of the body being provided with a soda cavity, the rear end of the body being provided with a gas cylinder cavity, an opening/closing door being provided at an opening of the gas cylinder cavity, a mounting cavity located at upper ends of the soda cavity and the gas cylinder cavity being provided on the body, a body mounting support being provided in the mounting cavity, and a first mounting hole and a second mounting hole being provided on the body mounting support;
a gas path body, a water bottle joint located in the soda cavity and a gas nozzle located in the water bottle joint being provided at the bottom of the gas path body, a main gas path passage in communication with the gas nozzle being provided on the gas path body, the water bottle joint enclosing the bottom of the gas path body to form an intercommunication area, the gas path body being pivoted in the first mounting hole so as to drive the water bottle joint to swing forward and backward relative to the body, a gas vent cavity being provided on the gas path body, a gas vent passage extending to the intercommunication area being provided at the front end of the gas vent cavity, a gas vent hole in communication with an outer side of the gas path body being provided at the rear end of the gas vent cavity, and a gas vent valve being provided in the gas vent cavity;
a gas inlet body, a gas cylinder interface located in the gas cylinder cavity being provided at the bottom of the gas inlet body, a gas inlet passage in communication with the main gas path passage being provided on the gas inlet body, a gas inlet rod located at the gas cylinder interface being provided on the gas inlet passage, and the gas inlet body being pivoted in the second mounting hole so as to drive the gas cylinder interface to swing relative to the body;
a gas inlet pressure rod, the gas inlet pressure rod being provided in the mounting cavity and used for driving the gas inlet rod to be pressed downward;
a driving rod, the driving rod being provided in the mounting cavity and connected to the gas vent valve, and the driving rod being used for driving the gas vent valve to move on the gas vent cavity; and
a pressing surface cover, the middle portion of the pressing surface cover being pivoted on the mounting cavity and located at the top of the body, the pressing surface cover swinging upward and downward relative to the mounting cavity under the action of an external force, a driving end of the gas inlet pressure rod and a driving end of the driving rod being both located at the bottom of the pressing surface cover, and upon downward press of two sides of the pressing surface cover, the gas inlet pressure rod and the driving rod being driven to enter their operating states, respectively.

As a further improvement for the above technical solution, a gas vent holder located at the rear end of the gas path body and facing the gas vent hole is provided in the mounting cavity, and the gas vent holder is pivoted on the body mounting support so as to swing transversely relative to the gas path body; a first resetting member is provided on the gas vent holder, and a normal-state abutting position and a reciprocating settling groove located below the normal-state abutting position and smoothly transitioning from the normal-state abutting position are provided on the surface of the gas vent holder; a lower position is provided in the reciprocating settling groove; the gas vent valve comprises a gas vent valve body, a gas vent valve head located at the front end of the gas vent valve body and used for blocking the gas vent passage, and a gas vent valve rod located at the rear end of the gas vent valve body and penetrating the gas vent hole to extend to the outer side of the gas path body; the gas vent valve rod is abutted against the normal-state abutting position under a normal state and the gas vent valve rod is movable relative to the gas vent holder so as to enter the reciprocating settling groove to enable the gas vent valve head to open the gas vent passage; a driving pressure tank is obliquely provided on the gas vent holder; and the rear end of the driving rod is inserted in the driving pressure tank, the middle portion of the driving rod is pivoted on the body mounting support to enable the driving rod to swing in a vertical direction, and the front end of the driving rod is located at the lower end of the pressing surface cover.

As a further improvement for the above technical solution, the reciprocating settling groove comprises a first slide and a second slide located at an end of the first slide and in communication with the first slide; the front end of the first slide is lower than the surface of the gas vent holder to form a first non-return surface, and an end of the first slide is higher than a starting end of the second slide to form a second non-return surface; and an end of the second slide is smoothly guided to the normal-state abutting position.

As a further improvement for the above technical solution, a protective door track located in the body is provided at an upper end of the opening/closing door; the opening/closing door moves transversely relative to the body to open/close the soda cavity; the protective door track is provided with a limit groove hole; a gas pressure lock is provided in the mounting cavity and the gas pressure lock comprises a lock cavity and a lock body located in the lock cavity; a gas-guiding passage extending to the intercommunication area is provided at the front end of the lock cavity, and a gas outlet hole is provided at the rear end of the lock cavity; a front lock head is provided at the front end of the lock body, and a rear lock head used for closing the gas outlet hole is provided at the rear end of the lock body; a lock rod inserted in the gas vent hole and extending to an outer side of the gas pressure lock is provided at the middle portion of the rear end of the lock body; a second resetting member connected to the lock body and driving the lock body to move toward the front end of the lock cavity is provided in the lock cavity; and when the rear lock head closes the gas outlet hole, the lock rod is inserted in the limit groove hole.

As a further improvement for the above technical solution, a limit part is provided on the gas inlet pressure rod, and a gas-filling limit block is pivoted in the mounting cavity; the gas-filling limit block comprises a driving end at the front end and a limit end at the rear end, and the limit end movably accesses below the limit part under the swinging action of the driving end; the driving end is located on the movement path of the protective door track and partially overlaps with the protective door track in a height direction; the protective door track is abutted against the driving end and lifts up the driving end during movement; and a third resetting member driving the driving end to reset downward is provided on the gas-filling limit block.

As a further improvement for the above technical solution, a lock notch is provided on the protective door track, a mechanical door latch located on the movement path of the protective door track and used for being clamped into a latch fastener is provided at the front end of the driving rod, a guide surface is provided at an edge of the mechanical door latch, a connecting frame is provided at a lower end of the pressing surface cover, and an upper lifting rod located at the front end of a driving tube and used for lifting up the front end of the driving rod is provided on the connecting frame. As a further improvement for the above technical solution, a track located at an upper end of an opening of the soda cavity is provided on the body, and the protective door track is inserted in the track; an opening/closing door bracket is provided at the bottom of the body and is connected with a lower end of the opening/closing door, and an end portion of the opening/closing door bracket is pivoted at the bottom of the body so as to assist the opening/closing door to swing transversely on the body so as to open/close the soda cavity; a reset torsion spring connected to the opening/closing door bracket is provided on the body; a gear groove is provided on the opening/closing door bracket, a rack is provided on the gear groove, and a one-way damping gear engaged with the rack is provided in the body; and a protective door hiding cavity located at a side of a protective door and configured for the protective door to enter therein is provided on the body.

As a further improvement for the above technical solution, pivot frames are provided on two sides of the first mounting hole, and first pivot shafts pivoted on the pivot frames are provided on two sides of the gas path body; a swing track is provided on one side of the pivot frame toward the gas path body, and at least two locating holes smoothly transitioning from an inner surface of the track are provided on an inner surface of the swing track; mounting channels are provided on two sides of the gas path body, and a dial shaft with a cambered front end is provided in the mounting channel; and an ejection spring located at the rear end of the dial shaft is provided in the mounting channel, and the front end of the dial shaft is inserted in the swing track and can access the locating hole under the action of an external force.

As a further improvement for the above technical solution, second pivot holes located on two sides of the second mounting hole and having upper openings are provided on the body mounting support, and second pivot shafts mounted in the second pivot holes along the upper openings are provided on two sides of the gas inlet body; a connecting rod bracket capped on an upper end of the second pivot hole is provided on the body mounting support, an elastic rod extending into the second mounting hole is provided at a lower end of the connecting rod bracket, and an elastic hook facing the gas inlet body is provided at an end portion of the elastic rod; a groove is vertically provided on a rear end surface of the gas inlet body, a raised limit stopper is provided on the bottom surface of the groove, and two side surfaces of the elastic hook are fitted with two side surfaces of the limit stopper to jointly form an inclined abutting-pushing surface that drives the elastic rod to deform toward an outer side of the gas inlet body; the gas inlet body during a swinging process enables the elastic hook to be respectively located on two sides of the limit stopper; and an upper end of the gas inlet rod extends to an upper surface of the connecting rod bracket, and an end portion of the gas inlet pressure rod is pivoted on the connecting rod bracket.

As a further improvement for the above technical solution, a gravity cavity is vertically provided on the gas path body, and a gravity hole extending to the intercommunication area is provided at the bottom of the gravity cavity; a gravity vent hole is provided at the top of the gravity cavity, and a gravity valve body liftable in the gravity cavity is provided in the gravity cavity; a gas guide gap is formed between the gravity valve body and a side wall of the gravity cavity; and a gravity valve head enclosing the gravity vent hole when the gravity valve body is jacked up is provided at the top of the gravity valve body, and a gas guide groove is provided at the bottom of the gravity valve body and/or on the bottom surface of the gravity cavity.

The beneficial effects of the present invention are as follows: by pivoting the gas path body and the gas inlet body to the body mounting support, the water bottle joint and the gas cylinder interface can swing forward and backward relative to the body, so that the carbon dioxide gas cylinder and the soda bottle are obliquely mounted on the gas cylinder interface and the water bottle joint, and then the carbon dioxide gas cylinder and the soda bottle are swung to be reset into the gas cylinder cavity and the soda cavity, thereby achieving a larger space for a gripper and more convenient mounting. At the same time, by an independently arranged soda cavity and the opening/closing door for opening/closing the soda cavity, the soda machine allows the soda bottle to be closed in the soda cavity in the soda preparation process. Therefore, even though the soda bottle collapses or explodes, a user will not be harmed thereby. The pressing surface cover provided on the top of the body can respectively drive the gas inlet pressure rod to allow the gas inlet rod to start the carbon dioxide gas cylinder for the gas supply of the soda bottle, or drive the driving rod to allow the gas vent valve to move in the gas vent cavity and thus open the gas vent passage and the gas vent hole for the gas venting of the soda bottle, thereby achieving simpler and more convenient operations.

### Brief Description of the Drawings

The present invention will be further explained below in conjunction with the description of the accompanying drawings and specific embodiments.
FIG. 1 is a first structural schematic diagram according to a preferred embodiment of the present invention;
FIG. 2 is a structural schematic diagram of a mounting cavity;
FIG. 3 is a structural schematic diagram with a track and part of a body mounting support hidden based on FIG. 2;
FIG. 4 is a second structural schematic diagram according to a preferred embodiment of the present invention;
FIG. 5 is a cross-sectional structural schematic diagram along an A-A direction in FIG. 4 when a driving rod and a gas vent holder are matched under a normal state;
FIG. 6 is a cross-sectional structural schematic diagram along an A-A direction in FIG. 4 when a driving rod and a gas vent holder are matched under a gas venting state;
FIG. 7 is a cross-sectional structural schematic diagram along a B-B direction in FIG. 4 when a gas vent valve and a gas vent holder are matched under a normal state;
FIG. 8 is a cross-sectional structural schematic diagram along a B-B direction in FIG. 4 when a gas vent valve and a gas vent holder are matched under a gas venting state;
FIG. 9 is a cross-sectional structural schematic diagram along a B-B direction in FIG. 4 for a gas vent valve and a gas vent holder to be matched when a soda bottle is obliquely mounted on a horizontal joint;
FIG. 10 is a cross-sectional structural schematic diagram along a C-C direction in FIG. 4;
FIG. 11 is a cross-sectional structural schematic diagram along a D-D direction in FIG. 4;
FIG. 12 is a cross-sectional structural schematic diagram along an E-E direction in FIG. 4 under a normal state;
FIG. 13 is a cross-sectional structural schematic diagram along an E-E direction in FIG. 4 when a carbon dioxide gas cylinder is obliquely mounted on a gas cylinder interface;
Fig. 14 is a structural schematic diagram of the inside of a gas cylinder cavity in the present invention;
FIG. 15 is a first exploded view of the present invention;
FIG. 16 is a second exploded view of the present invention;
FIG. 17 is a structural schematic diagram for pivoting a gas path body on the body mounting support;
FIG. 18 is a structural schematic diagram for coordination of an opening/closing door bracket with a body and an opening/closing door;
FIG. 19 is a structural schematic diagram of a gas vent holder;
FIG. 20 is a first structural schematic diagram of a gravity valve body;
FIG. 21 is a second structural schematic diagram of a gravity valve body;
FIG. 22 is a structural schematic diagram for coordination of a gas vent body with a connecting rod bracket;
FIG. 23 is a structural schematic diagram of a gas vent body;
FIG. 24 is a structural schematic diagram of a connecting rod bracket.

### Detailed Description of Embodiments

This section will describe the specific embodiments of the present invention in detail. The preferred embodiments of the present invention are shown in the accompanying drawings. The function of the accompanying drawings is to supplement the statement of the text part of the description with graphics, so that people can intuitively and vividly understand each technical feature and overall technical solution of the present invention. However, the accompanying drawings shall not be construed as a limitation to the protection scope of the present invention.

In the statement of the present invention, it should be understood that orientation statements, such as orientation or position relationships indicated by up, down, front, back, left, right, etc., are based on the orientation or position relationships shown in the accompanying drawings and are only to facilitate the statement of the present invention and simplify the statement, rather than indicate or imply that the device or element referred to must have a specific orientation, be constructed and operate in a specific orientation, and therefore should not be understood as a limitation to the present invention.

In the statement of the present invention, "several" means one or more, "a plurality of" means two or more, "greater than", "less than", and "more than", etc. are understood to exclude the original number, and above, below, within, etc. are understood to include the original number. If there is a statement of first and second, it is only for the purpose of distinguishing technical features, and cannot be understood as indicating or implying the relative importance or implicitly indicating the number of indicated technical features or implicitly indicating the order of indicated technical features.

In the statement of the present invention, unless otherwise explicitly specified, words such as setting, installation, and connection should be understood in a broad sense. Those skilled in the art can reasonably determine the specific meanings of the above words in the present invention in combination with the specific content of the technical solution.

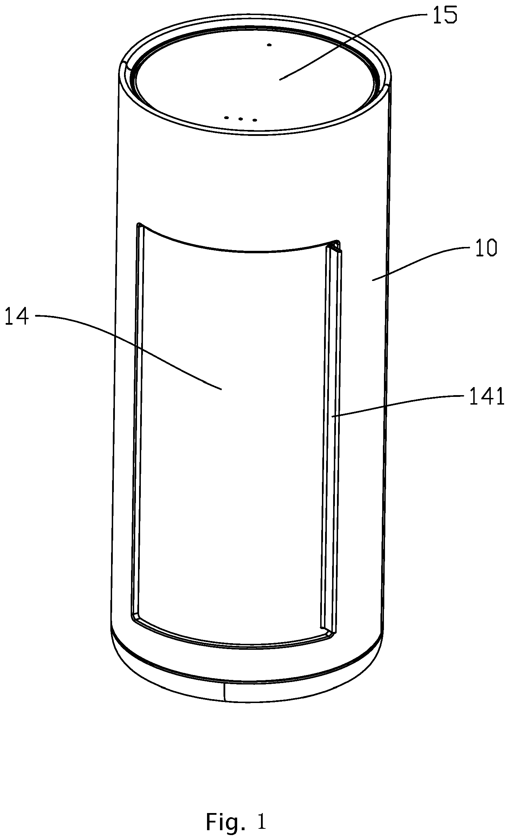

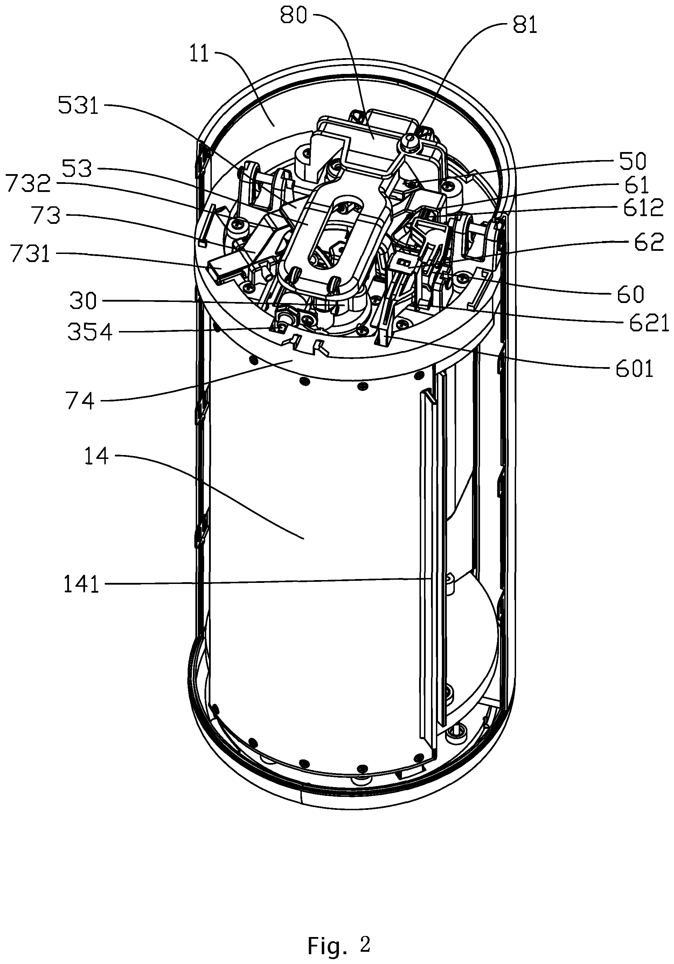

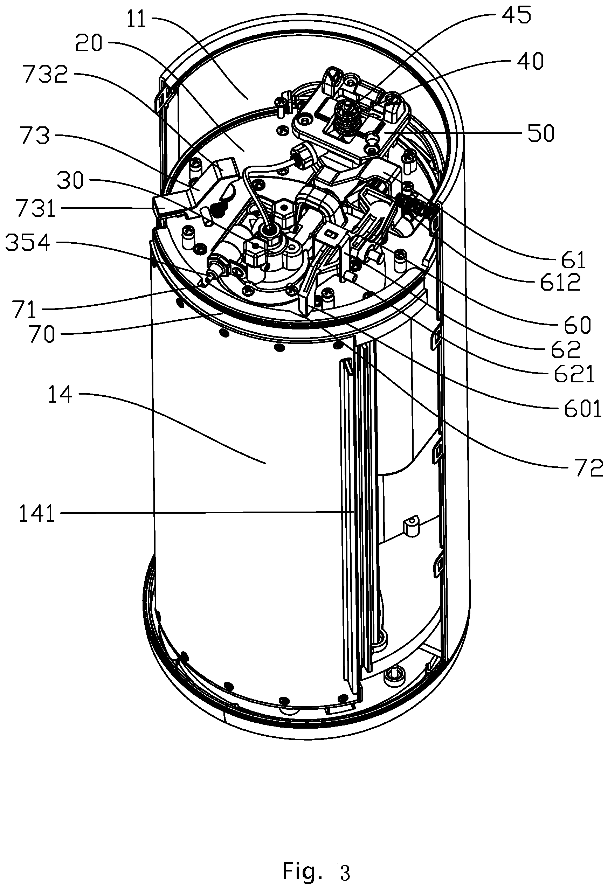

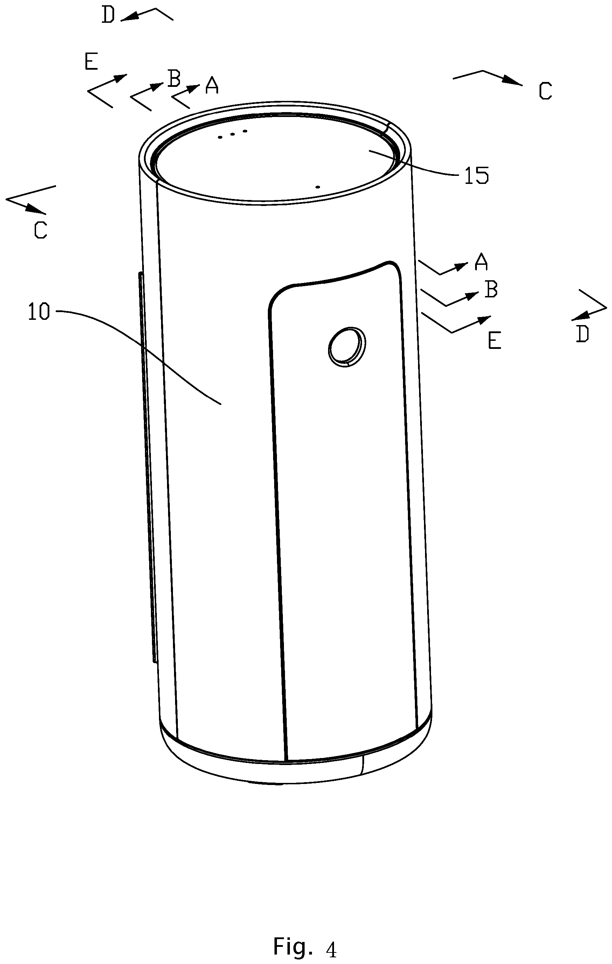

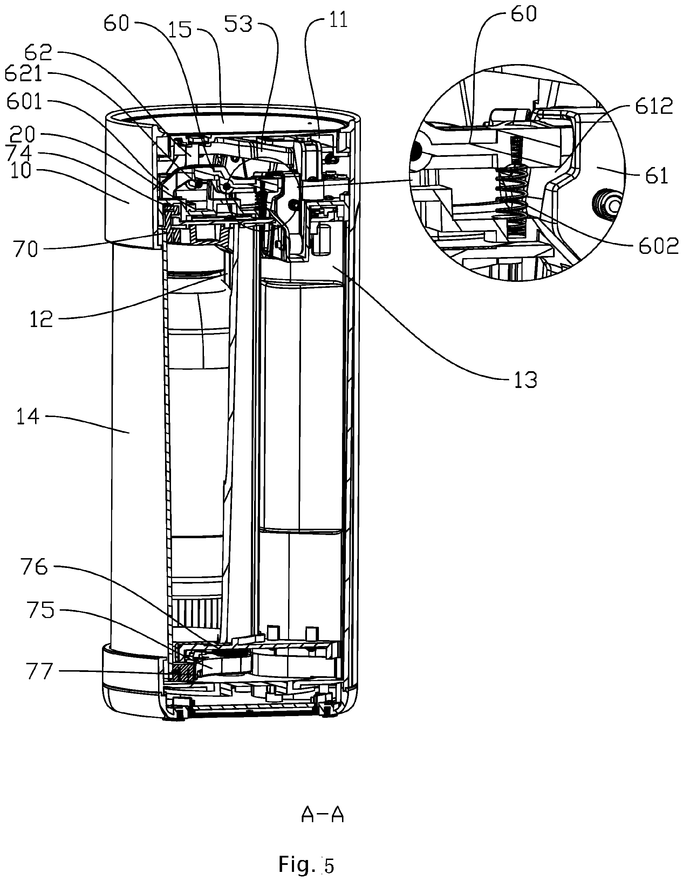

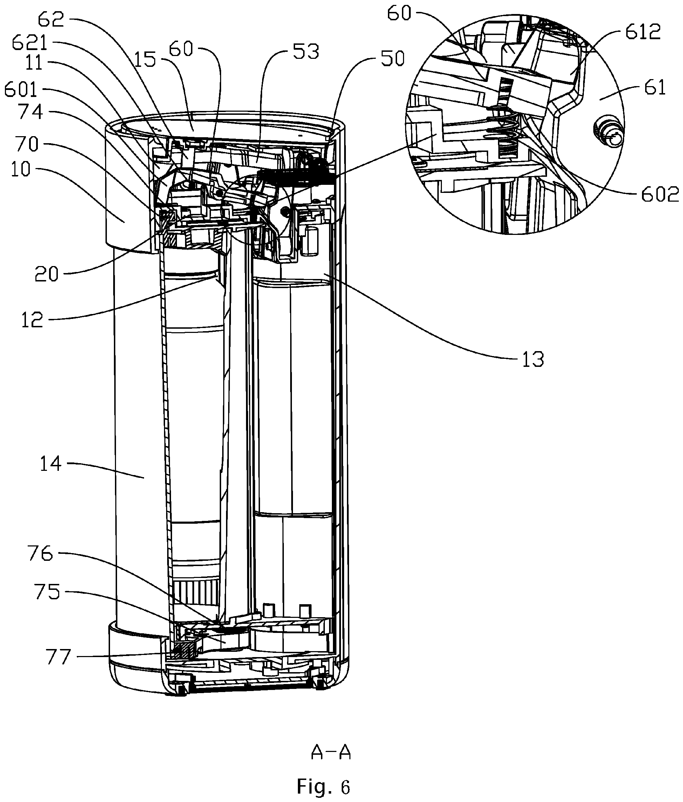

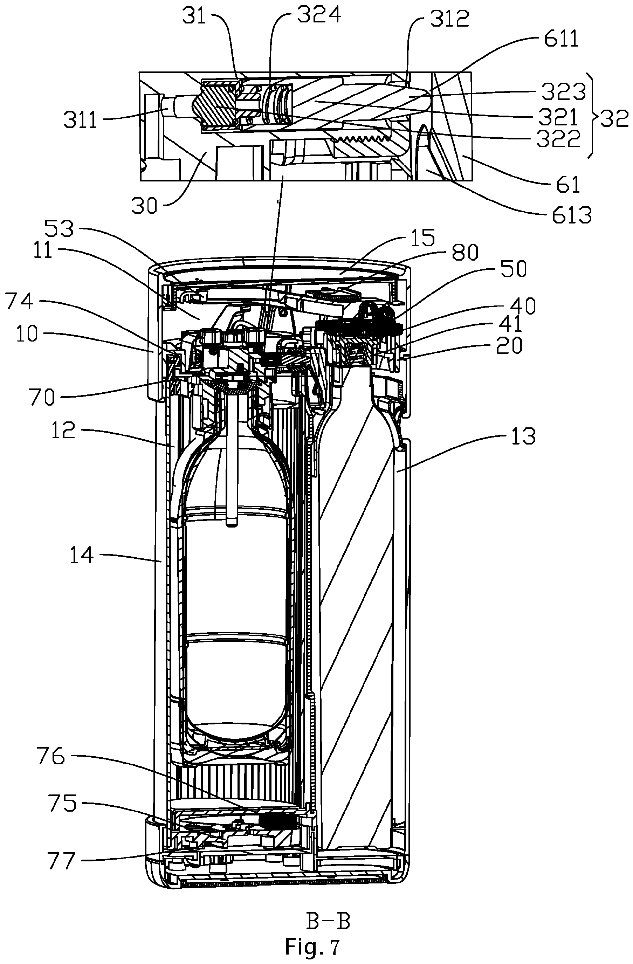

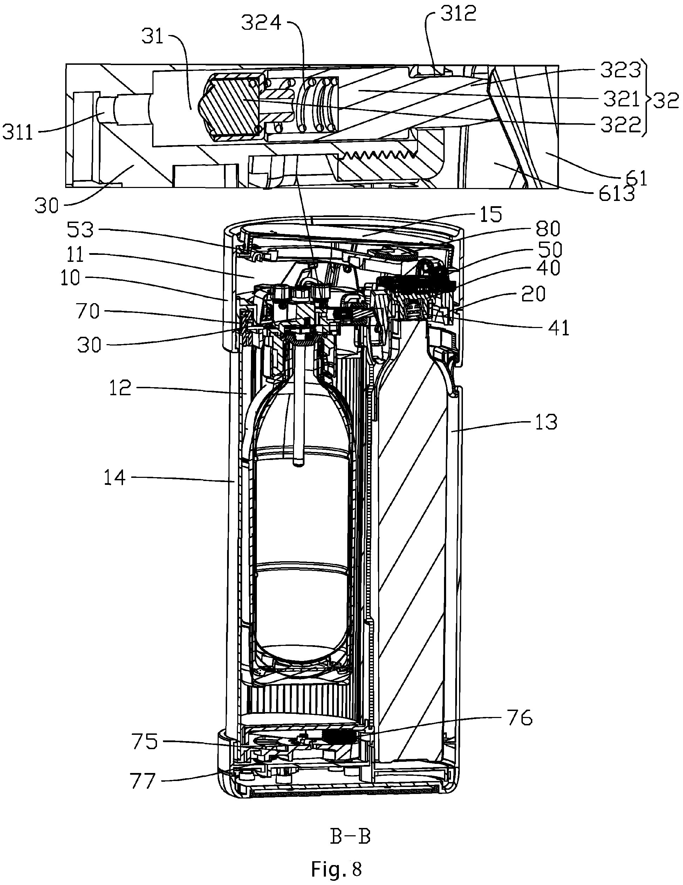

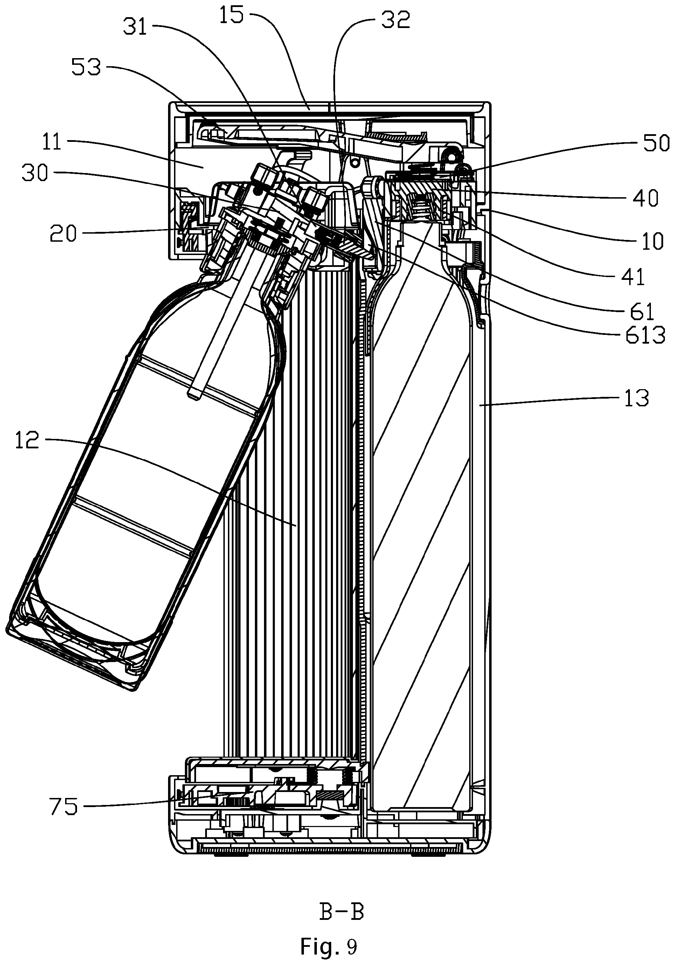

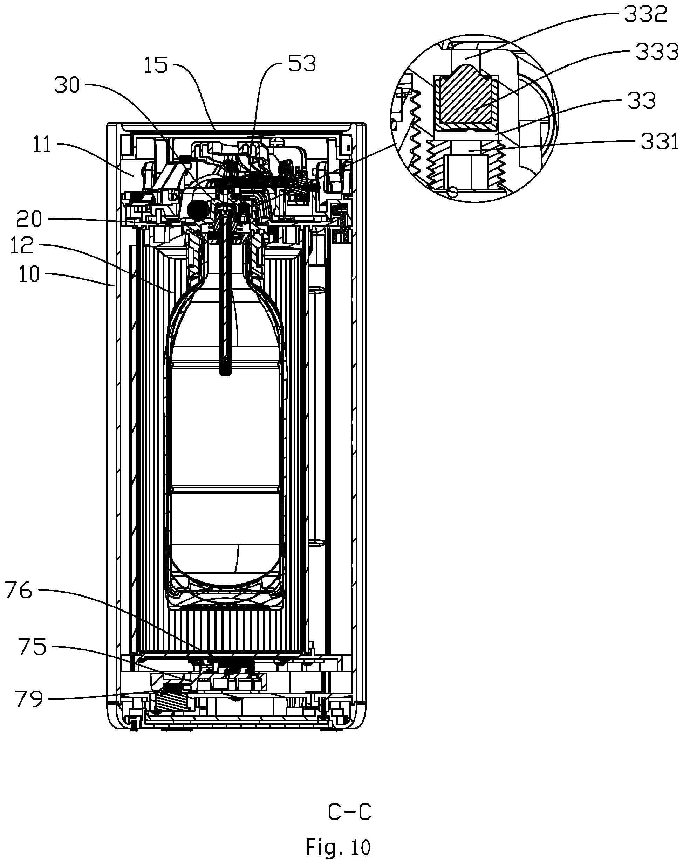

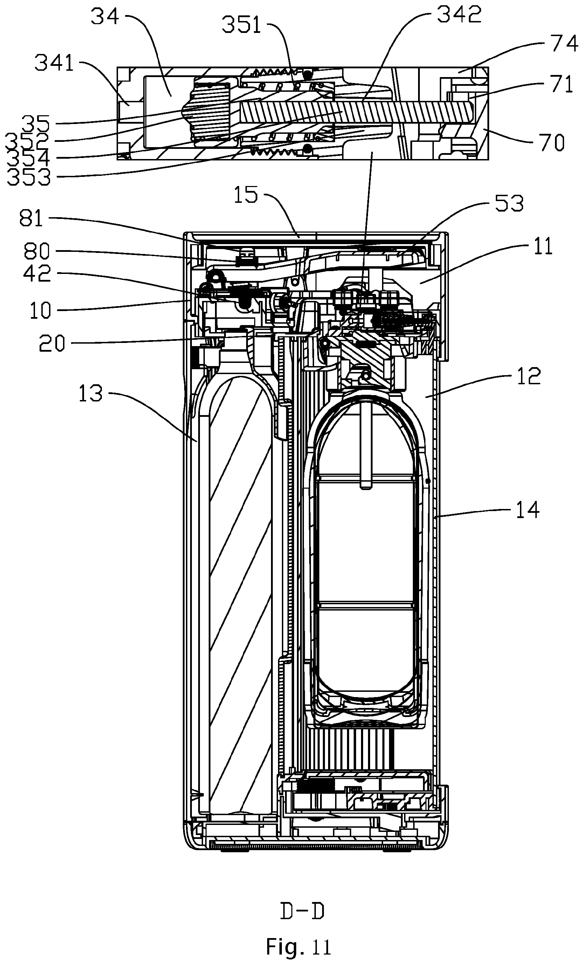

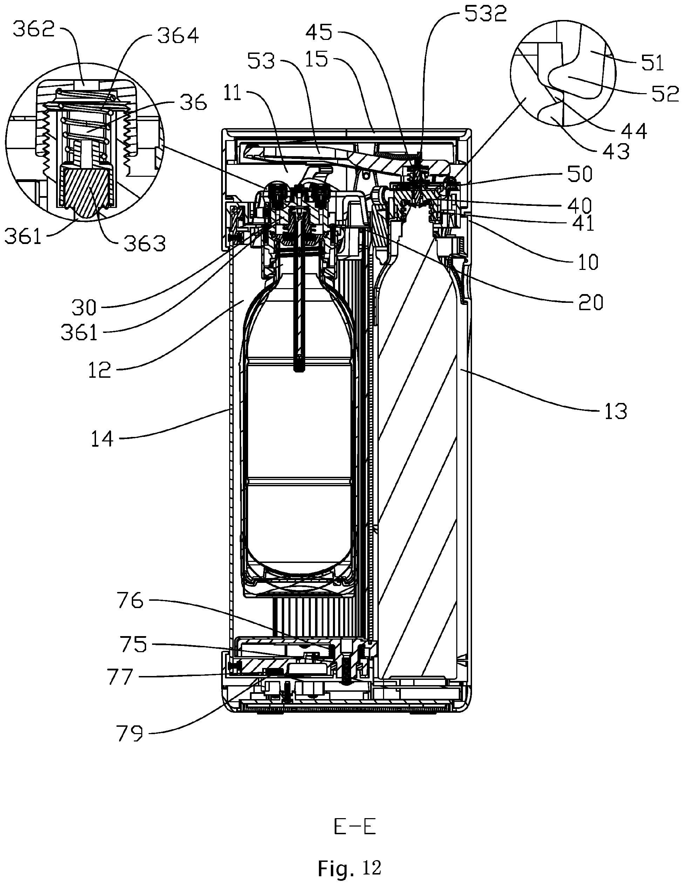

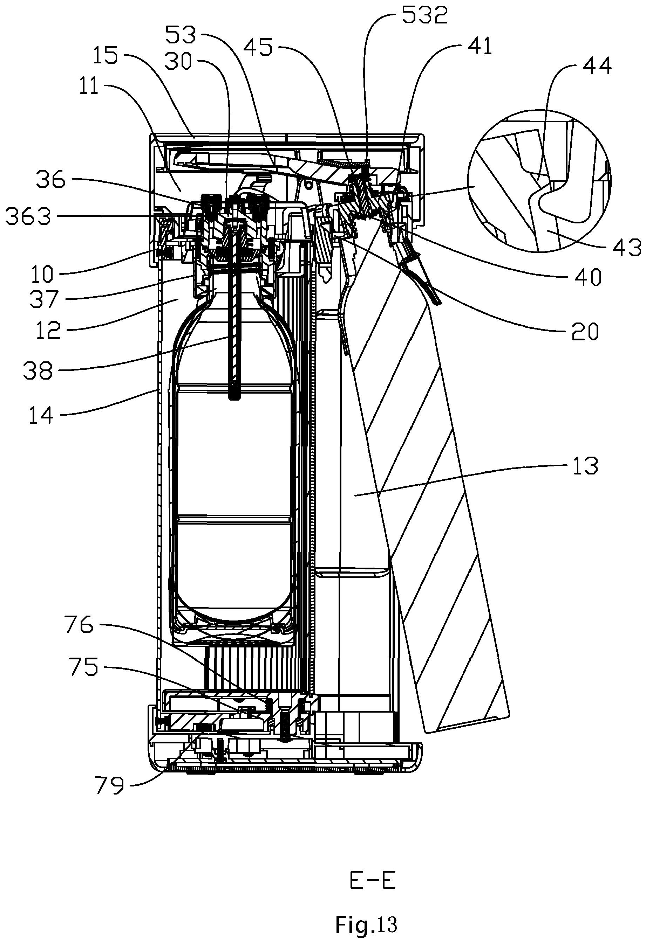

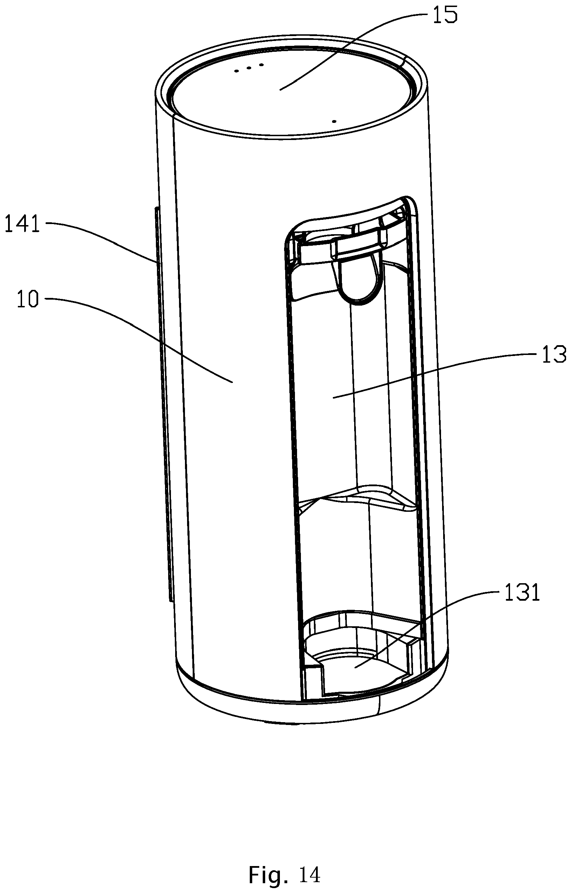

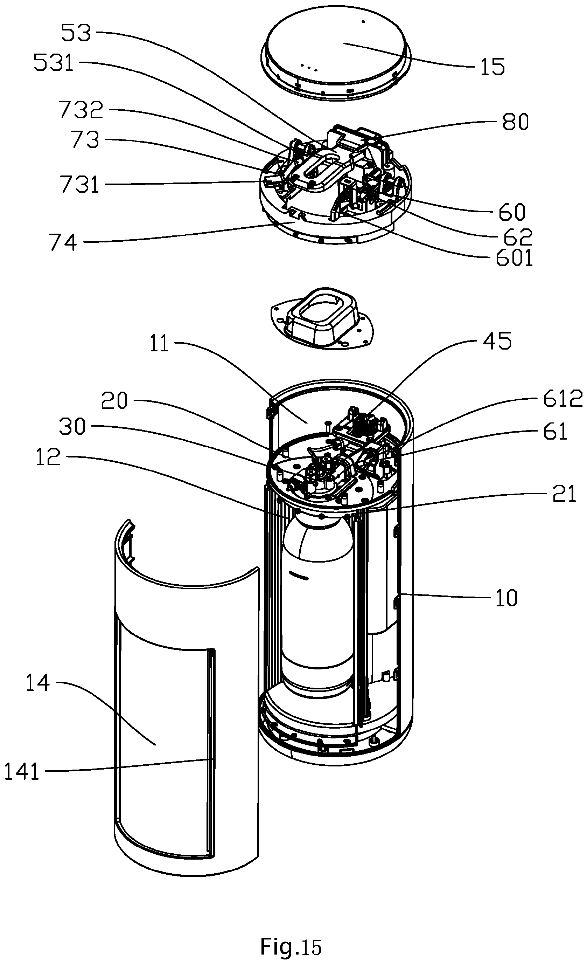

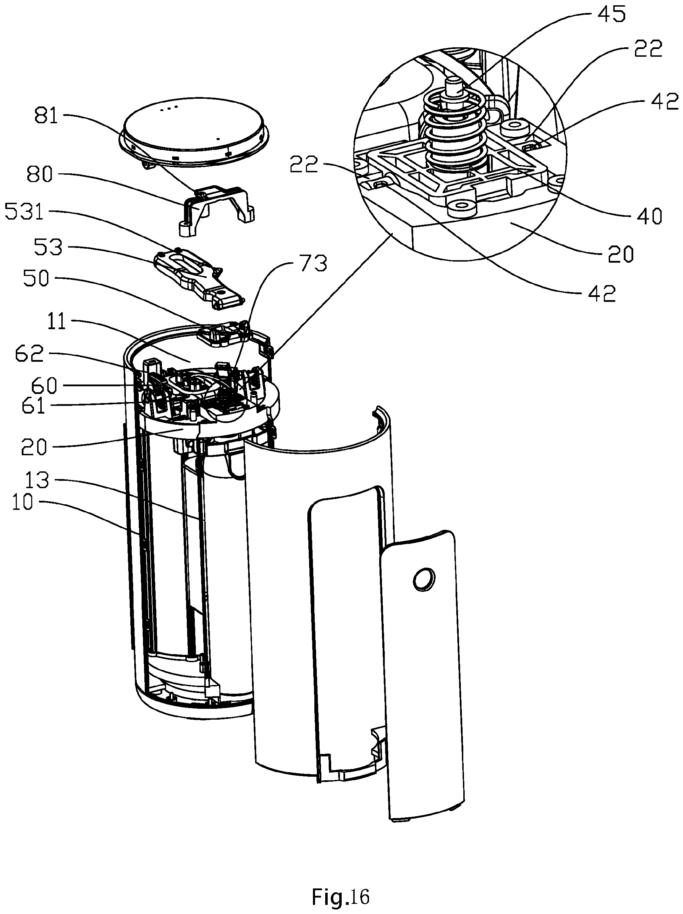

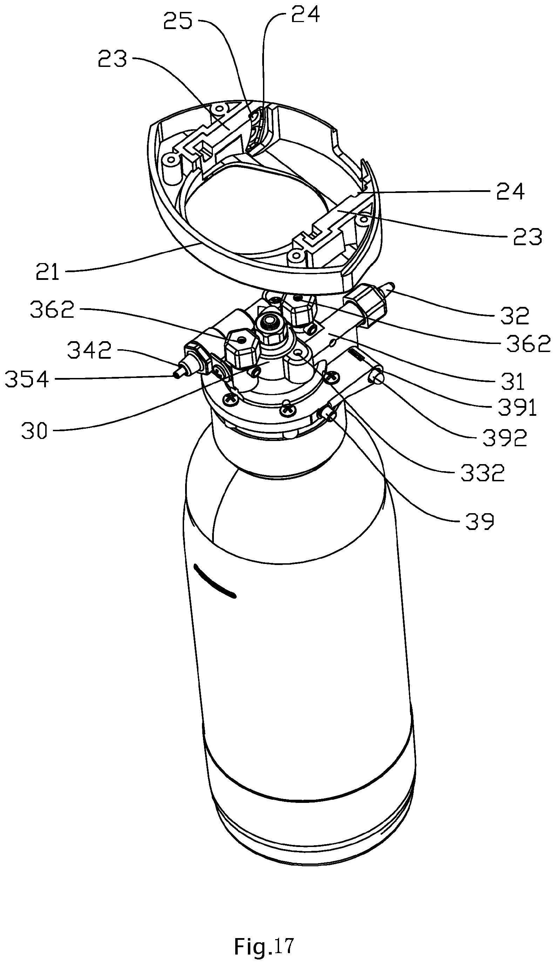

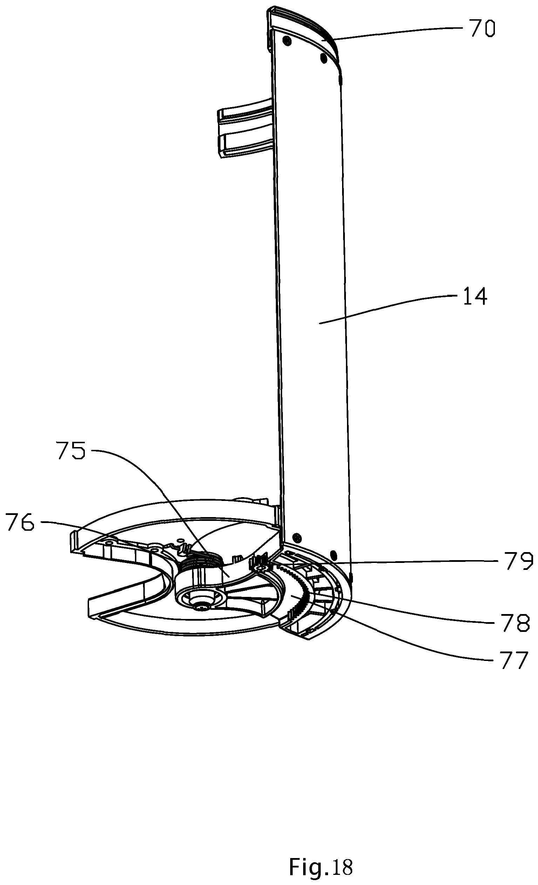

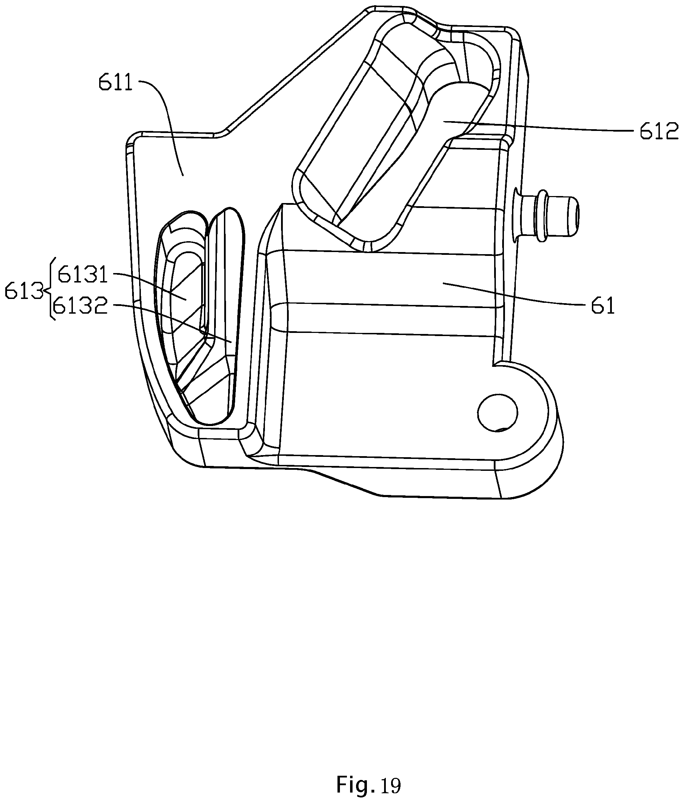

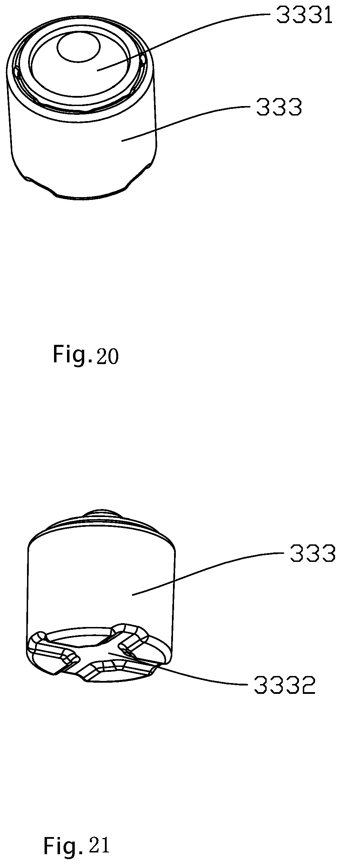

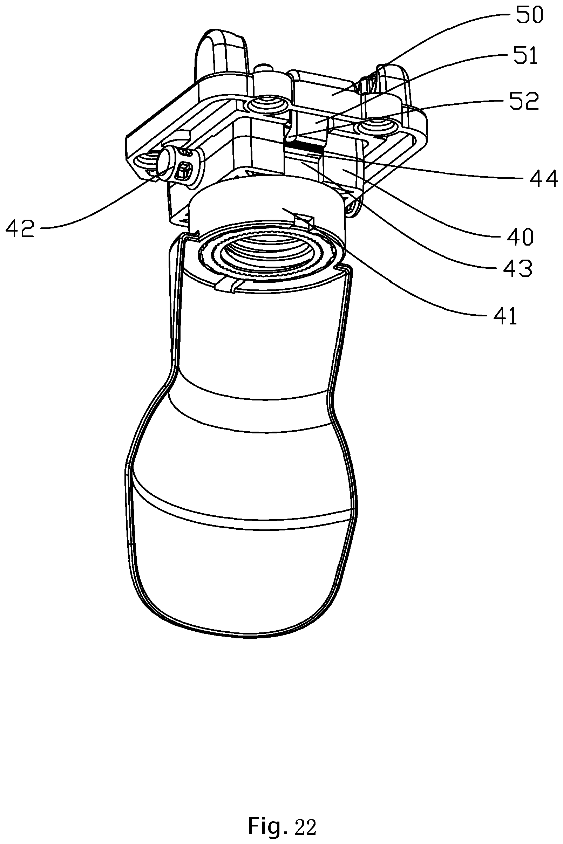

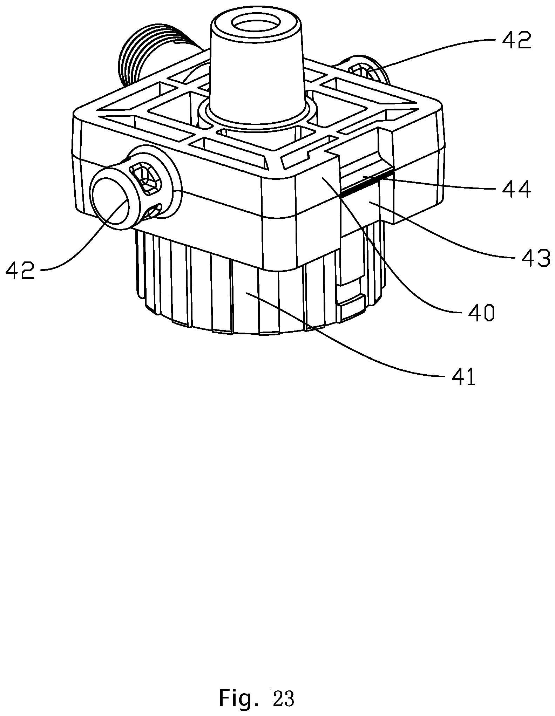

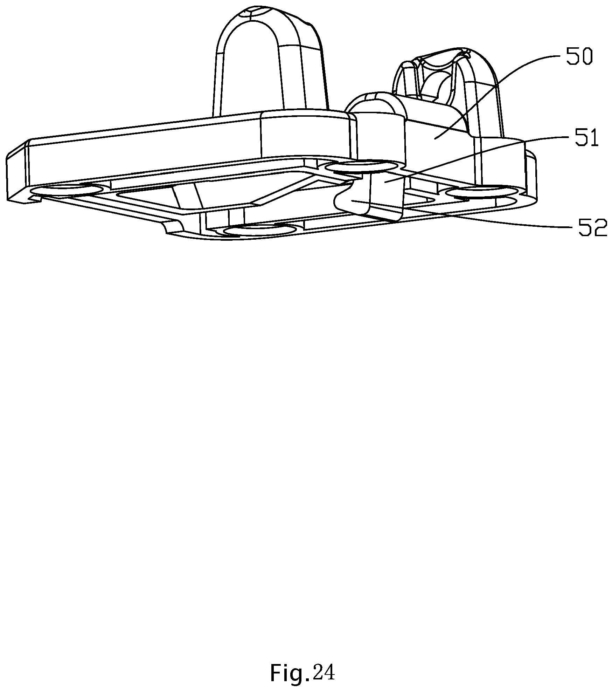

Referring to FIGs. 1 to 24, a new soda machine comprises:
a body 10, the front end of the body 10 being provided with a soda cavity 12, the rear end of the body 10 being provided with a gas cylinder cavity 13, an opening/closing door 14 being provided at an opening of the gas cylinder cavity 13, a mounting cavity 11 located at upper ends of the soda cavity 12 and the gas cylinder cavity 13 being provided on the body 10, a body mounting support 20 being provided in the mounting cavity 11, and a first mounting hole and a second mounting hole being provided on the body mounting support 20;
a gas path body 30, a water bottle joint 37 located in the soda cavity 12 and a gas nozzle 38 located in the water bottle joint 37 being provided at the bottom of the gas path body 30, a main gas path passage in communication with the gas nozzle 38 being provided on the gas path body 30, the water bottle joint 37 enclosing the bottom of the gas path body 30 to form an intercommunication area, the intercommunication area being in communication with the soda bottle after the soda bottle being mounted on the bottle joint 37, the gas path body 30 being pivoted in the first mounting hole so as to drive the water bottle joint 37 to swing forward and backward relative to the body 10, a gas vent cavity 31 being provided on the gas path body 30, a gas vent passage 311 extending to the intercommunication area being provided at the front end of the gas vent cavity 31, a gas vent hole 312 in communication with an outer side of the gas path body 30 being provided at the rear end of the gas vent cavity 31, and a gas vent valve 32 being provided in the gas vent cavity 31;
a gas inlet body 40, a gas cylinder interface 41 located in the gas cylinder cavity 13 being provided at the bottom of the gas inlet body 40, a gas inlet passage in communication with the main gas path passage being provided on the gas inlet body 40, a gas inlet rod 45 located at the gas cylinder interface 41 being provided on the gas inlet passage, and the gas inlet body 40 being pivoted in the second mounting hole so as to drive the gas cylinder interface 41 to swing relative to the body 10;
a gas inlet pressure rod 53, the gas inlet pressure rod 53 being provided in the mounting cavity 11 and used for driving the gas inlet rod 45 to be pressed downward; a driving rod 60, the driving rod 60 being provided in the mounting cavity 11 and connected to the gas vent valve 32, and the driving rod 60 being used for driving the gas vent valve 32 to move on the gas vent cavity 31; and
a pressing surface cover 15, the middle portion of the pressing surface cover 15 being pivoted on the mounting cavity 11 and located at the top of the body 10, the pressing surface cover 15 swinging upward and downward relative to the mounting cavity 11 under the action of an external force, a driving end 731 of the gas inlet pressure rod 53 and a driving end 731 of the driving rod 60 being both located at the bottom of the pressing surface cover 15, and upon downward press of two sides of the pressing surface cover 15, the gas inlet pressure rod 53 and the driving rod 60 being driven to enter their operating states, respectively.

By pivoting the gas path body 30 and the gas inlet body 40 to the body mounting support 20, the water bottle joint 37 and the gas cylinder interface 41 can swing forward and backward relative to the body 10, so that the carbon dioxide gas cylinder and the soda bottle are obliquely mounted on the gas cylinder interface 41 and the water bottle joint 37, and then the carbon dioxide gas cylinder and the soda bottle are swung to be restored into the gas cylinder cavity 13 and the soda cavity 12, thereby achieving a larger space for a gripper and more convenient mounting. At the same time, by an independently arranged soda cavity 12 and the opening/closing door 14 for opening/closing the soda cavity 12, the soda machine allows the soda bottle to be closed in the soda cavity 12 in the soda preparation process. Therefore, even though the soda bottle collapses or explodes, a user will not be harmed thereby. The pressing surface cover 15 provided on the top of the body 10 can respectively drive the gas inlet pressure rod 53 to allow the gas inlet rod 45 to start the carbon dioxide gas cylinder for the gas supply of the soda bottle, or drive the driving rod 60 to allow the gas vent valve 32 to move in the gas vent cavity 31 and thus open the gas vent passage 311 and the gas vent hole 312 for the gas venting of the soda bottle, thereby achieving simpler and more convenient operations.

For further optimization, preferably, a gas vent holder 61 located at the rear end of the gas path body 30 and facing the gas vent hole 312 is provided in the mounting cavity 11, and the gas vent holder 61 is pivoted on the body mounting support 20 so as to swing transversely relative to the gas path body 30; a first resetting member is provided on the gas vent holder 61, and a normal-state abutting position 611 and a reciprocating settling groove 613 located below the normal-state abutting position 611 and smoothly transitioning from the normal-state abutting position 611 are provided on the surface of the gas vent holder 61; a lower position is provided in the reciprocating settling groove 613; the gas vent valve 32 comprises a gas vent valve body 321, a gas vent valve head 322 located at the front end of the gas vent valve body 321 and used for blocking the gas vent passage 311, and a gas vent valve rod 323 located at the rear end of the gas vent valve body 321 and penetrating the gas vent hole 312 to extend to the outer side of the gas path body 30; the gas vent valve rod 323 is abutted against the normal-state abutting position 611 under a normal state, and the gas vent valve rod 323 is movable relative to the gas vent holder 61 so as to enter the reciprocating settling groove 613 to enable the gas vent valve head 322 to open the gas vent passage 311; a driving pressure tank 612 is obliquely provided on the gas vent holder 61; and the rear end of the driving rod 60 is inserted in the driving pressure tank 612, the middle portion of the driving rod 60 is pivoted on the body mounting support 20 to enable the driving rod 60 to swing in a vertical direction, and the front end of the driving rod 60 is located at the lower end of the pressing surface cover 15.

Under a normal state, the gas vent valve rod 323 is abutted against the normal-state abutting position 611, so that the gas vent valve head 322 is jacked up at a port of the gas vent passage 311, thereby closing the gas vent passage 311. At this moment, the gas cannot be vented by the gas vent passage 311. In a gas vent mode, one corresponding side of the pressing surface cover 15 is pressed to lift up the front end of the driving rod 60 and press downward the rear end of the driving rod. Since the driving rod 60 is pivoted in the mounting cavity 11 to be limited for supporting and vertical lifting, the gas vent holder 61 is driven to swing by the oblique driving pressure tank 612 so as to enable the gas vent valve rod 323 to enter the reciprocating settling groove 613 from the normal-state abutting position 611 and move to a lower point. At this moment, the high gas pressure in the soda bottle pushes the gas vent valve 32 to move in the gas vent cavity 31, so that the gas vent valve head 322 leaves away from the gas vent passage 311 to open the gas vent passage 311. Afterward, the gas in the soda bottle is vented for pressure relief along the gas vent passage 311-the gas vent cavity 31-the gas vent hole 312. After the completion of gas venting, the user loosens hands, and the gas vent holder 61 is reset under the action of the first resetting member to enable the gas vent valve rod 323 to move and reset to the normal-state abutting position 611 along the reciprocating settling groove 613, thereby re-blocking the gas vent passage 311. When the soda bottle is obliquely mounted on the water bottle joint 37, since the gas path body 30 swings relative to the body 10, the gas vent cavity 31 and the gas vent valve 32 are synchronously driven to swing, and the gas vent valve rod 323 moves into the reciprocating settling groove 613 under the swinging action of the gas path body 30 to open the gas vent passage 311-the gas vent cavity 31-the gas vent hole 312 during the mounting process of the soda bottle, thereby preventing the risk generated to the gas inletting of the soda bottle due to misoperation.

Preferably, the reciprocating settling groove 613 comprises a first slide 6131 and a second slide 6132 located at an end of the first slide 6131 and in communication with the first slide 6131; the front end of the first slide 6131 is lower than the surface of the gas vent holder 61 to form a first non-return surface, and an end of the first slide 6131 is higher than a starting end of the second slide 6132 to form a second non-return surface; an end of the second slide 6132 is smoothly guided to the normal-state abutting position 611, so that the user needs to enable the gas vent valve rod 323 to enter the second slide 6132 along the first slide 6131 before it is reset to the normal-state abutting position 611, thereby ensuring the gas venting efficiency. Moreover, the user needs to completely press one end of the pressing surface cover 15 to drive an end portion of the gas vent valve rod 323 to enter the second slide 6132 so as to reset the gas vent valve 32 in the gas vent cavity 31.

For further optimization, preferably, the front end of the gas vent valve head 322 is quasi-conically shaped.

For further improvement, preferably, a fourth resetting member 602 is provided at the bottom of the rear end of the driving rod 60 so as to better drive the driving rod 60 and the gas vent holder 61 to reset.

For further optimization, preferably, an elastic member 324 is provided between the gas vent valve body 321 and the gas vent valve head 322. The elastic member 324 provides a force toward the gas vent passage 311 to the gas vent valve head 322, so that after the gas pressure in the soda bottle is completely vented, the elastic member 324 can slightly push the gas vent valve head 322 onto the gas vent passage 311 and meanwhile reversely push the gas vent valve rod 323, thereby ensuring that the gas vent valve rod 323 is always abutted against the surface of the gas vent holder 61.

For further optimization, preferably, a protective door track 70 located in the body 10 is provided at an upper end of the opening/closing door 14; the opening/closing door 14 moves transversely relative to the body 10 to open/close the soda cavity 12; the protective door track 70 is provided with a limit groove hole 71; a gas pressure lock is provided in the mounting cavity 11 and is preferably directly provided on the gas path body 30, and the gas pressure lock comprises a lock cavity 34 and a lock body 35 located in the lock cavity 34; a gas-guiding passage 341 extending to the intercommunication area is provided at the front end of the lock cavity 34, and a gas outlet hole 342 is provided at the rear end of the lock cavity 34; a front lock head 352 is provided at the front end of the lock body 35, and a rear lock head 353 used for closing the gas outlet hole 342 is provided at the rear end of the lock body 35; a lock rod 354 inserted in the gas vent hole 312 and extending to an outer side of the gas pressure lock is provided at the middle portion of the rear end of the lock body 35; a second resetting member 351 connected to the lock body 35 and driving the lock body 35 to move toward the front end of the lock cavity 34 is provided in the lock cavity 34; and when the rear lock head 353 closes the gas outlet hole 342, the lock rod 354 is inserted in the limit groove hole 71. By this structure, when the opening/closing door 14 is under an opening state, the lock rod 354 and the limit groove hole 71 do not overlap with each other. At this moment, even if the carbon dioxide gas is injected into the soda bottle to form a high-pressure state, the carbon dioxide gas will abut against and push the front lock head 352, causing the lock body 35 to move toward the rear end of the lock cavity 34. At this moment, the lock rod 354 is abutted against the surface of the protective door track 70 but does not enter the limit groove hole 71, so that the rear lock head 353 cannot move to close the gas outlet hole 342. At this moment, once the carbon dioxide gas in the soda bottle forms a high pressure, it will be vented along the lock cavity 34 and the gas outlet hole 342, so that the high pressure state cannot be formed in the soda bottle to prepare soda. When the opening/closing door 14 is completely closed, the protective door track 70 moves to the limit groove hole 71 and faces the lock rod 354. At this moment, when the high gas pressure in the soda bottle pushes the lock body 35 to move, the lock rod 354 overlaps with the position of the limit groove hole 71 to push the lock rod 354 to be inserted into the limit groove hole 71 under the action of the gas pressure, so that the lock body 35 has a sufficient movement distance and the rear lock head 353 closes the gas outlet hole 342 along an inner side of the lock cavity 34. At this moment, the gas in the soda bottle will no longer escape, thus forming the high pressure for preparing soda. This structure ensures that the soda machine cannot be operated normally when the opening/closing door 14 is not closed, thereby further ensuring safety.

For further optimization, preferably, a limit part is provided on the gas inlet pressure rod 53, and a gas-filling limit block 73 is pivoted in the mounting cavity 11; the gas-filling limit block 73 comprises a driving end 731 at the front end and a limit end 732 at the rear end, and the limit end 732 movably accesses below the limit part under the swinging action of the driving end 731; the driving end 731 is located on the movement path of the protective door track 70 and partially overlaps with the protective door track 70 in a height direction; the protective door track 70 is abutted against the driving end 731 and lifts up the driving end 731 during movement; and a third resetting member driving the driving end 731 to reset downward is provided on the gas-filling limit block 73. Under the present state, when the opening/closing door 14 is opened, the protective door track 70 moves to overlap with the driving end 731 to lift up the driving end 731, so that the limit end 732 of the gas-filling limit block 73 is displaced in the horizontal direction to enter a lower end of the limit part of the gas inlet pressure rod 53 and thus limit the downward press of the gas inlet pressure rod 53. Therefore, the gas inlet pressure rod 53 cannot open the carbon dioxide gas cylinder and accordingly cannot enter a gas inlet mode. Preferably, the limit part is a limit plate 531 independently provided on the gas inlet pressure rod 53.

For further optimization, preferably, a lock notch 72 is provided on the protective door track 70, a mechanical door latch 601 located on the movement path of the protective door track 70 and used for being clamped into a latch fastener is provided at the front end of the driving rod 60, a guide surface is provided at an edge of the mechanical door latch 601, a connecting frame 62 is provided at a lower end of the pressing surface cover 15, and an upper lifting rod 621 located at the front end of a driving tube and used for lifting up the front end of the driving rod 60 is provided on the connecting frame 62. When the opening/closing door 14 is closed, the mechanical door latch 601 moves along the surface of the protective door track 70 to be clamped into the lock notch 72, thereby locking the opening/closing door 14 and preventing the opening/closing door 14 from being opened when the soda machine is operated. Upon the entry of the gas vent mode after the preparation of the soda in the soda bottle, the pressing surface cover 15 is pressed to lift up the front end of the driving rod 60 to operate the gas vent valve 32. At this moment, the driving rod 60 synchronously lifts up the mechanical door latch 601 from the lock notch 72. Then, when the gas in the soda bottle is completely vented, the second resetting member 351 drives the lock body 35 to move toward the front end of the lock cavity 34 to detach the lock rod 354 from the limit groove hole 71, so that the opening/closing door 14 can be opened normally. By the double protection of the gas pressure lock and the mechanical door latch 601, the opening/closing door 14 cannot be opened when the soda machine is operated.

For further optimization, preferably, the track 74 located at an upper end and/or a lower end of the opening of the soda cavity 12 is provided on the body 10, and an upper end and/or a lower end of the opening/closing door 14 is mounted on the track 74 so as to more smoothly slide to open/close the soda cavity 12. Preferably, the track 74 is located at the upper end of the opening of the soda cavity 12. Preferably, a first notch corresponding to the limit groove hole 71, a second notch corresponding to the driving end 731 and configured for locating the driving end 731 therein and a third notch corresponding to the lock notch 72 are provided on the track 74. The protective door track 70 is inserted into the track 74, and the opening/closing door bracket 75 is provided at the bottom of the body 10. The opening/closing door bracket 75 is connected to a lower end of the opening/closing door 14, and an end portion of the opening/closing door bracket 75 is pivoted to the bottom of the body 10 to assist the opening/closing door 14 to swing transversely on the body 10 to open/close the soda cavity 12. The reset torsion spring 76 connected to the opening/closing door bracket 75 is provided on the body 10, the gear groove 77 is provided on the opening/closing door bracket 75, and the rack 78 is provided on the gear groove 77. A one-way damping gear 79 engaged with the rack 78 is provided in the body 10, and a protective door hiding cavity located at a side of a protective door and configured for the protective door to enter therein is provided on the body 10. By the reset torsion spring 76, after the mechanical door latch 601 is opened and meanwhile the lock rod 354 is detached from the limit groove hole 71, the reset torsion spring 76 drives the opening/closing door bracket 75 to rotate, thereby driving the opening/closing door 14 to be automatically transversely opened, and the single damping gear 79 buffers and limits the opening speed of the opening/closing door 14, thereby slowing down the opening speed of the opening/closing door 14 and reducing the impact effect generated when the opening/closing door 14 is opened. Preferably, soft cushioning rubber pads used for being abutted against the edge of the opening/closing door 14 are provided at an inner side of the opening of the soda cavity 12 and an inner side wall of the opening/closing door hiding cavity. Preferably, a handle 141 is provided on the surface of the opening/closing door 14 to facilitate the operation of the opening/closing door 14.

In other embodiments, the track 74 may not be provided, but two sets of opening/closing door brackets 75 arranged above and below the body 10 are used for limiting and assisting the movement trajectory of the opening/closing door 14. For further optimization, preferably, pivot frames 23 are provided on two sides of the first mounting hole, and first pivot shafts 39 pivoted on the pivot frames 23 are provided on two sides of the gas path body 30. The method for pivoting the gas path body 30 on the first mounting hole can be also as follows: shaft holes are provided at a side wall of the first mounting hole and a side wall of the gas path body 30, and one rotating shaft is inserted into the shaft hole members of the side wall of the first mounting hole and the side wall of the gas path body to achieve the pivoting effect. A swing track 24 is provided on one side of the pivot frame 23 toward the gas path body, and at least two locating holes 25 smoothly transitioning from an inner surface of the track 74 are provided on an inner surface of the swing track 24; mounting channels 391 are provided on two sides of the gas path body 30, and a dial shaft 392 with a cambered front end is provided in the mounting channel 391; and an ejection spring located at the rear end of the dial shaft 392 is provided in the mounting channel 391, and the front end of the dial shaft 392 is inserted in the swing track 24 and can access the locating hole 25 under the action of an external force. The swing track 24 can limit the swinging range of the gas path body 30 and meanwhile play a role in assisting the gas path body 30 to swing. During the swinging process of the gas path body 30, relative force application exists between the cambered surface of the edge of the dial shaft 392 and the cambered surface of the edge of the locating hole 25, so that the dial shaft 392 is pressed into the mounting channel 391 and thus the dial shaft 392 is detached from the locating hole 25 to enter the swing track 24 and then enter the next locating hole 25 to be clamped therein. During the swinging process, a certain force needs to be applied to release the gas path body 30 from the limitation of the locating hole 25, so as to form a gear state for the swinging process of the gas path body 30 by the locating hole 25. Preferably, there are two locating holes 25, corresponding to the state when the gas path body 30 swings to the maximum position to conveniently mount the soda bottle, and the state when it swings to the minimum position to place the soda bottle at an operating position, respectively.

Preferably, a limit groove is provided at the rear end of the inner wall of the mounting channel 391, and a limit boss inserted into the limit groove is provided on the rear end surface of the dial shaft 392. The limit boss is inserted into the limit groove, thereby limiting the movement distance of the dial shaft 392 in the mounting channel 391 and preventing the dial shaft 392 from being detached from the mounting channel 391. Preferably, the limiting boss has a wedge shape that gradually thickens from the rear end of the dial shaft 392 toward the front end.

In one embodiment, the dial shaft 392 is implemented as a spherical roll ball.

In the present solution, preferably, the body mounting support 20 comprises a main frame and a sub-frame 21 mounted on the main frame. The first mounting hole and the pivot frame 23 are both provided on the sub-frame 21. During production, the gas path body 30 is mounted on the sub-frame 21, and then the sub-frame 21 is mounted at the bottom of the main frame, thereby facilitating production and mounting.

In the present solution, preferably, an upper protective cover covered on the upper end of the gas path body 30 is provided on the body mounting support 20.

For further optimization, preferably, second pivot holes 22 located on two sides of the second mounting hole and having upper openings are provided on the body mounting support 20, and second pivot shafts 42 mounted in the second pivot holes 22 along the upper openings are provided on two sides of the gas inlet body 40; a connecting rod bracket 50 capped on an upper end of the second pivot hole 22 is provided on the body mounting support 20, an elastic rod 51 extending into the second mounting hole is provided at a lower end of the connecting rod bracket 50, and an elastic hook 52 facing the gas inlet body 40 is provided at an end portion of the elastic rod 51; a groove 43 is vertically provided on a rear end surface of the gas inlet body 40, a raised limit stopper 44 is provided on the bottom surface of the groove 43, and two side surfaces of the elastic hook 52 are fitted with two side surfaces of the limit stopper 44 to jointly form an inclined abutting-pushing surface that drives the elastic rod 51 to deform toward an outer side of the gas inlet body 40; the gas inlet body 40 during a swinging process enables the elastic hook 52 to be respectively located on two sides of the limit stopper 44; and an upper end of the gas inlet rod 45 extends to an upper surface of the connecting rod bracket 50, and an end portion of the gas inlet pressure rod 53 is pivoted on the connecting rod bracket 50. During the swinging process of the gas inlet body 40, the limit block 44 is driven to swing synchronously, so that the limit block 44 squeezes the elastic hook 52 and thus drives the elastic rod 51 to deform in a direction away from the gas inlet body 40, thereby causing the elastic hook 52 to cross the limit block 44 to the other side. By the coordination between the limit block 44 and the elastic hook 52, the gas inlet body 40 is provided with two modes for fixation, respectively a normal operating mode in which the gas inlet body 40 is under a vertical state and a gas cylinder mounting mode in which the gas inlet body 40 is under an oblique state. When the gas inlet body 40 is under either mode, a certain external force is needed to enable the limit block 44 to cross the limitation of the elastic hook 52 to enter the other mode. Preferably, the angle between the two side surfaces of the limit block 44 and the inner surface of the groove 43 is an obtuse angle. Preferably, the front end of the gas inlet pressure rod 53 is located below the front end of the pressing surface cover 15. When the front end of the pressing surface cover 15 is pressed, the front end of the pressing surface cover 15 synchronously drives the gas inlet pressure rod 53 to be pressed downward, and then the carbon dioxide gas cylinder is started for gas inletting by the gas inlet rod 45. At this moment, the pressing surface cover 15 is not in contact with the front end of the driving rod 60, but when the rear end of the pressing surface cover 15 is pressed, the front end of the pressing surface cover 15 is tilted upward and thus the connecting frame 62 drives the driving rod 60 to swing so as to perform gas venting.

Preferably, a pressing needle 532 located directly above the gas inlet rod 45 is provided at the bottom of the gas inlet pressure rod 53. Only when the gas inlet body 40 is under the normal operating mode, the gas inlet rod 45 is just at the bottom of the pressing needle 532 and thus can be driven by the gas inlet pressure rod 53 to be pressed downward. When the gas inlet body 40 swings toward the outer side of the body to be used for mounting the carbon dioxide gas cylinder, the gas inlet rod 45 and the pressing needle 532 are misaligned at this moment, so that the gas inlet rod 45 cannot be pressed downward.

For further optimization, preferably, a clamping notch 131 for fixing the carbon dioxide gas cylinder is provided at the bottom of the gas cylinder cavity 13, so that the carbon dioxide gas cylinder can be further fixed by the clamping notch 131.

For further optimization, preferably, a gravity cavity 33 is vertically provided on the gas path body 30, and a gravity hole 331 extending to the intercommunication area is provided at the bottom of the gravity cavity 33; a gravity vent hole 332 is provided at the top of the gravity cavity 33, and a gravity valve body 333 liftable in the gravity cavity 33 is provided in the gravity cavity 33; a gas guide gap is formed between the gravity valve body 333 and a side wall of the gravity cavity 33; and a gravity valve head 3331 enclosing the gravity vent hole 332 when the gravity valve body 333 is jacked up is provided at the top of the gravity valve body 333, and a gas guide groove 3332 is provided at the bottom of the gravity valve body 333 and/or on the bottom surface of the gravity cavity 33. Due to the existence of a gravity valve, in the process of mounting the soda bottle on the soda machine for storage, if the carbon dioxide gas cylinder has gas leakage by the gas inlet body 40, the gas pressure generated by the slowly leaking carbon dioxide gas is insufficient to jack up the gravity valve body 333, so that the carbon dioxide gas is naturally vented along the gravity hole 331-the gravity cavity 33-the gravity vent hole 332, thereby preventing the soda bottle from forming a high-pressure state due to gas leakage during storage. When the soda machine is operated, due to the rapid inflation of carbon dioxide gas into the soda bottle, the high-pressure gas jacks up the gravity valve body 333, causing the gravity valve head 3331 to block the gravity vent hole 332, so that the gas pressure in the soda bottle can be increased normally. The function of a gas guide groove 3332 is to enable the gas to flow better when the gravity valve body 333 falls on the bottom of the gravity cavity 33 due to gravity.

For further optimization, in order to prevent the gas pressure in the soda bottle from being too high, preferably, a pressure relief cavity 36 is provided on the gas path body 30. A pressure relief channel 361 extending to the intercommunication area and a pressure relief hole 362 in communication with the outer side of the gas path body 30 are provided at two ends of the pressure relief cavity 36, respectively. A pressure relief valve 363 is provided in the pressure relief cavity 36, and a pressure relief gap is formed between the pressure relief valve 363 and the pressure relief hole 362. A head of the pressure relief valve 363 used for closing the pressure relief channel 361 is provided at an end of the pressure relief valve 363. A fifth resetting member 364 used for pressing the pressure relief valve 363 on the pressure relief channel 361 is provided on an end portion of the pressure relief valve 363. When the gas pressure in the soda bottle is too high, the gas pressure in the soda bottle pushes the pressure relief valve 363 to conquer the resetting pressure of the fifth resetting member 364, thereby opening the pressure relief channel 361 and venting the gas in the soda bottle along the pressure relief hole 362. Dynamic balance is formed between the fifth resetting member 364 and the gas pressure in the soda bottle, thereby ensuring the gas pressure in the soda bottle.

For further optimization, preferably, a limit bracket 80 is mounted on the body mounting support 20. A reset push rod 81 used for being abutted against the bottom surface of the pressing surface cover 15 is provided on the limit bracket 80. A reset spring used for driving the reset push rod 81 to move upward is provided at the bottom of the reset push rod. When the pressing surface cover 15 is under a horizontal state at the top of the body 10, the reset push rod 81 is under the horizontal state under the action of the reset spring and the reset push rod 81 is located below the rear side of the pressing surface cover 15, which can not only limit the downward press range of the rear end of the pressing surface cover 15, but also synchronously cooperate with the gas inlet pressure rod 53, thereby enabling the pressing surface cover 15 to automatically recover to the horizontal balance state when the external force is lost. In other embodiments, the gas inlet pressure rod 53 may indirectly drive the gas inlet pressure rod 45 to be pressed downward. For example, an inching switch is provided at the lower end of the gas inlet pressure rod 53. The inching switch is electrically connected to a driving motor, and the driving motor is connected to the gas inlet rod 45, so that when the gas inlet pressure rod 53 is pressed downward to touch the inching switch, the driving motor drives the gas inlet rod 45 to be pressed downward.

In the present solution, the first resetting member, the second resetting member 351, the third resetting member, the fourth resetting member 602 and the fifth resetting member 364 are all preferably in the implementation form of springs, and may also be selected as elastic columns, a group of mutually exclusive magnets and other implementation forms.

The above are only preferred embodiments of the present invention, and are not intended to limit the patent scope of the present invention. Under the inventive concept of the present invention, equivalent structural transformations made using the contents of the description and drawings of the present invention, or directly or indirectly used in other relevant technical fields are all included in the patent protection scope of the present invention.

## Claims

1. A new soda machine, comprising:
a body (10), the front end of the body (10) being provided with a soda cavity (12), the rear end of the body (10) being provided with a gas cylinder cavity (13), an opening/closing door (14) being provided at an opening of the gas cylinder cavity (13), a mounting cavity (11) located at upper ends of the soda cavity (12) and the gas cylinder cavity (13) being provided on the body (10), a body mounting support (20) being provided in the mounting cavity (11), and a first mounting hole and a second mounting hole being provided on the body mounting support (20);
a gas path body (30), a water bottle joint (37) located in the soda cavity (12) and a gas nozzle (38) located in the water bottle joint (37) being provided at the bottom of the gas path body (30), a main gas path passage in communication with the gas nozzle (38) being provided on the gas path body (30), the water bottle joint (37) enclosing the bottom of the gas path body (30) to form an intercommunication area, the gas path body (30) being pivoted in the first mounting hole so as to drive the water bottle joint (37) to swing forward and backward relative to the body (10), a gas vent cavity (31) being provided on the gas path body (30), a gas vent passage (311) extending to the intercommunication area being provided at the front end of the gas vent cavity (31), a gas vent hole (312) in communication with an outer side of the gas path body (30) being provided at the rear end of the gas vent cavity (31), and a gas vent valve (32) being provided in the gas vent cavity (31);
a gas inlet body (40), a gas cylinder interface (41) located in the gas cylinder cavity (13) being provided at the bottom of the gas inlet body (40), a gas inlet passage in communication with the main gas path passage being provided on the gas inlet body (40), a gas inlet rod (45) located at the gas cylinder interface (41) being provided on the gas inlet passage, and the gas inlet body (40) being pivoted in the second mounting hole so as to drive the gas cylinder interface (41) to swing relative to the body (10);
a gas inlet pressure rod (53), the gas inlet pressure rod (53) being provided in the mounting cavity (11) and used for driving the gas inlet rod (45) to be pressed downward;
a driving rod (60), the driving rod (60) being provided in the mounting cavity (11) and connected to the gas vent valve (32), and the driving rod (60) being used for driving the gas vent valve (32) to move on the gas vent cavity (31); and
a pressing surface cover (15), the middle portion of the pressing surface cover (15) being pivoted on the mounting cavity (11) and located at the top of the body (10), the pressing surface cover (15) swinging upward and downward relative to the mounting cavity (11) under the action of an external force, a driving end (731) of the gas inlet pressure rod (53) and a driving end (731) of the driving rod (60) being both located at the bottom of the pressing surface cover (15), and upon downward press of two sides of the pressing surface cover (15), the gas inlet pressure rod (53) and the driving rod (60) being driven to enter their operating states, respectively.

2. The new soda machine of claim 1, wherein:
a gas vent holder (61) located at the rear end of the gas path body (30) and facing the gas vent hole (312) is provided in the mounting cavity (11), and the gas vent holder (61) is pivoted on the body mounting support (20) so as to swing transversely relative to the gas path body (30); a first resetting member is provided on the gas vent holder (61), and a normal-state abutting position (611) and a reciprocating settling groove (613) located below the normal-state abutting groove (611) and smoothly transitioning from the normal-state abutting position (611) are provided on the surface of the gas vent holder (61); a lower position is provided in the reciprocating settling groove (613);
the gas vent valve (32) comprises a gas vent valve body (321), a gas vent valve head (322) located at the front end of the gas vent valve body (321) and used for blocking the gas vent passage (311), and a gas vent valve rod (323) located at the rear end of the gas vent valve body (321) and penetrating the gas vent hole (312) to extend to the outer side of the gas path body (30); the gas vent valve rod (323) is abutted against the normal-state abutting position (611) under a normal state and the gas vent valve rod (323) is movable relative to the gas vent holder (61) so as to enter the reciprocating settling groove (613) to enable the gas vent valve head (322) to open the gas vent passage (311); a driving pressure tank (612) is obliquely provided on the gas vent holder (61); and the rear end of the driving rod (60) is inserted in the driving pressure tank (612), the middle portion of the driving rod (60) is pivoted on the body mounting support (20) to enable the driving rod (60) to swing in a vertical direction, and the front end of the driving rod (60) is located at the lower end of the pressing surface cover (15).

3. The new soda machine of claim 2, wherein:
the reciprocating settling groove (613) comprises a first slide (6131) and a second slide (6132) located at an end of the first slide (6131) and in communication with the first slide (6131); the front end of the first slide (6131) is lower than the surface of the gas vent holder (61) to form a first non-return surface, and an end of the first slide (6131) is higher than a starting end of the second slide (6132) to form a second non-return surface; and an end of the second slide (6132) is smoothly guided to the normal-state abutting position (611).

4. The new soda machine of claim 1 or 2 or 3, wherein:
a protective door track (70) located in the body (10) is provided at an upper end of the opening/closing door (14); the opening/closing door (14) moves transversely relative to the body (10) to open/close the soda cavity (12); the protective door track (70) is provided with a limit groove hole (71); a gas pressure lock is provided in the mounting cavity (11) and the gas pressure lock comprises a lock cavity (34) and a lock body (35) located in the lock cavity (34); a gas-guiding passage (341) extending to the intercommunication area is provided at the front end of the lock cavity (34), and a gas outlet hole (342) is provided at the rear end of the lock cavity (34); a front lock head (352) is provided at the front end of the lock body (35), and a rear lock head (353) used for closing the gas outlet hole (342) is provided at the rear end of the lock body (35); a lock rod (354) inserted in the gas vent hole (312) and extending to an outer side of the gas pressure lock is provided at the middle portion of the rear end of the lock body (35); a second resetting member (351) connected to the lock body (35) and driving the lock body (35) to move toward the front end of the lock cavity (34) is provided in the lock cavity (34); and when the rear lock head (353) closes the gas outlet hole (342), the lock rod (354) is inserted in the limit groove hole (71).

5. The new soda machine of claim 4, wherein:
a limit part is provided on the gas inlet pressure rod (53), and a gas-filling limit block (73) is pivoted in the mounting cavity (11); the gas-filling limit block (73) comprises the driving end (731) at the front end and a limit end (732) at the rear end, and the limit end (732) movably accesses below the limit part under the swinging action of the driving end (731); the driving end (731) is located on the movement path of the protective door track (70) and partially overlaps with the protective door track (70) in a height direction; the protective door track (70) is abutted against the driving end (731) and lifts up the driving end (731) during movement; and a third resetting member driving the driving end (731) to reset downward is provided on the gas-filling limit block (73).

6. The new soda machine of claim 4, wherein:
a lock notch (72) is provided on the protective door track (70), a mechanical door latch (601) located on the movement path of the protective door track (70) and used for being clamped into a latch fastener is provided at the front end of the driving rod (60), a guide surface is provided at an edge of the mechanical door latch (601), a connecting frame (62) is provided at a lower end of the pressing surface cover (15), and an upper lifting rod (621) located at the front end of a driving tube and used for lifting up the front end of the driving rod (60) is provided on the connecting frame (62).

7. The new soda machine of claim 4, wherein:
a track (74) located at an upper end of an opening of the soda cavity (12) is provided on the body (10), and the protective door track (70) is inserted in the track (74); an opening/closing door bracket (75) is provided at the bottom of the body (10), the opening/closing door bracket (75) is connected with a lower end of the opening/closing door (14), and an end portion of the opening/closing door bracket (75) is pivoted at the bottom of the body (10) so as to assist the opening/closing door (14) to swing transversely on the body (10) so as to open/close the soda cavity (12); a reset spring (76) connected to the opening/closing door bracket (75) is provided on the body (10); a gear groove (77) is provided on the opening/closing door bracket (75), a rack (78) is provided on the gear groove (77), and a one-way damping gear (79) engaged with the rack (78) is provided in the body (10); and a protective door hiding cavity located at a side of a protective door and configured for the protective door to enter therein is provided on the body (10).

8. The new soda machine of claim 1, wherein:
pivot frames (23) are provided on two sides of the first mounting hole, and first pivot shafts (39) pivoted on the pivot frames (23) are provided on two sides of the gas path body (30); a swing track (24) is provided on one side of the pivot frame (23) toward the gas path body, and at least two locating holes (25) smoothly transitioning from an inner surface of the track (74) are provided on an inner surface of the swing track (24); mounting channels (391) are provided on two sides of the gas path body (30), and a dial shaft (392) with a cambered front end is provided in the mounting channel (391); and an ejection spring located at the rear end of the dial shaft (392) is provided in the mounting channel (391), and the front end of the dial shaft (392) is inserted in the swing track (24) and can access the locating hole (25) under the action of an external force.

9. The new soda machine of claim 1, wherein:
second pivot holes (22) located on two sides of the second mounting hole and having upper openings are provided on the body mounting support (20), and second pivot shafts (42) mounted in the second pivot holes (22) along the upper openings are provided on two sides of the gas inlet body (40); a connecting rod bracket (50) capped on an upper end of the second pivot hole (22) is provided on the body mounting support (20), an elastic rod (51) extending into the second mounting hole is provided at a lower end of the connecting rod bracket (50), and an elastic hook (52) facing the gas inlet body (40) is provided at an end portion of the elastic rod (51); a groove (43) is vertically provided on a rear end surface of the gas inlet body (40), a raised limit stopper (44) is provided on the bottom surface of the groove (43), and two side surfaces of the elastic hook (52) are fitted with two side surfaces of the limit stopper (44) to jointly form an inclined abutting-pushing surface that drives the elastic rod (51) to deform toward an outer side of the gas inlet body (40); the gas inlet body (40) during a swinging process enables the elastic hook (52) to be respectively located on two sides of the limit stopper (44); and an upper end of the gas inlet rod (45) extends to an upper surface of the connecting rod bracket (50), and an end portion of the gas inlet pressure rod (53) is pivoted on the connecting rod bracket (50).

10. The new soda machine of claim 1, wherein:
a gravity cavity (33) is vertically provided on the gas path body (30), and a gravity hole (331) extending to the intercommunication area is provided at the bottom of the gravity cavity (33); a gravity vent hole (332) is provided at the top of the gravity cavity (33), and a gravity valve body (333) liftable in the gravity cavity (33) is provided in the gravity cavity (33); a gas guide gap is formed between the gravity valve body (333) and a side wall of the gravity cavity (33); and a gravity valve head (3331) enclosing the gravity vent hole (332) when the gravity valve body (333) is jacked up is provided at the top of the gravity valve body (333), and a gas guide groove (3332) is provided at the bottom of the gravity valve body (333) and/or on the bottom surface of the gravity cavity (33).
